# EUROPEAN PATENT APPLICATION

(11) **EP 1 160 664 A2**
(43) Date of publication of application: **05.12.2001**
(21) Application number: 01304378.1
(22) Date of filing: 17.05.2001
(51) Int. Cl.: G06F 9/44

(54) **Agent display apparatus displaying personified agent for selectively executing process**

(30) Priority: 17.05.2000 JP 2000145110
(71) Applicant: SHARP KABUSHIKI KAISHA, Osaka 545-8522 (JP)
(72) Inventor: Sato, Ryoichi, Seika-cho, Soraku-gun, Kyoto (JP); Kuromusha, Kenichi, Yamatokoriyama-shi, Nara (JP); Kawamura, Akiyoshi, Yamatokoriyama-shi, Nara (JP); Miyakawa, Harumitsu, Shiki-gun, Nara (JP); Keshi,Ikuo, Nara-shi, Nara (JP)
(74) Representative: Brown, Kenneth Richard

(57) **Abstract**

An agent interface (1) controls display of an agent and receives a request from a user. A search engine (4) searches for an action script describing a procedure of controlling the agent interface (1) in accordance with the request input from the agent interface (1). An action script executing engine (3) executes the action script searched by the search engine (4). Thus, since action scripts adapted to be used for the same kind but different types of electrical household appliances are prepared in action script DB (5), for example, the different types of electrical household appliances can be operated by the same procedure and interfaces can be unified.

## Description

### BACKGROUND OF THE INVENTION

### Field of the Invention

The present invention relates to a technique for controlling an application program or electrical household appliance by an information processing apparatus such as a personal computer. More particularly, the present invention relates to an agent display apparatus displaying an agent for interactively controlling an application program or electrical household appliance, an agent display method, and a storage medium storing an agent display program.

### Description of the Background Art

In recent years, electrical household appliances are adapted to have a greater level of performance and functionality. In addition, a technique for controlling such electrical household appliances by an information processing apparatus such as a personal computer (hereinafter abbreviated as PC) is being developed. For controlling an electrical household appliance by a conventional PC, a control application program (hereinafter abbreviated as CAP) designed to control the electrical household appliance is installed in the PC and each CAP is registered corresponding to an icon. A user clicks the icon to start the CAP or controls the electrical household appliance by operating an application program interface (hereinafter abbreviated as APIF) offered by the CAP. The relevant technique is disclosed in Japanese Patent Laying-Open No. 8-305531.

In an agent interface method for a household PC disclosed in the aforementioned laid-open application, an AP event reference table holding an AP event to be notified to an agent manager by a CAP is registered. Then, the CAP transmits the AP event to be notified to the agent manager with reference to the AP event reference table. Further, the agent manager accumulates/learns the AP event and determines if a message should be transmitted to the user based on the result. If the message should be transmitted, a personified agent is displayed through a graphical interface and the message is transmitted to the user by voice synthesis and text display. Then, a response from the user is input by voice recognition and, based on the response result of the user, the agent manager controls the CAP.

In the above-described method of controlling the electrical household appliance by a PC, the CAP is registered corresponding to an icon which is then clicked for starting the program. This method largely differs from an existing method of operating the electrical household appliance. As such, the above-described method suffers from a problem that the operation is difficult to a user who is not experienced with a PC.

Further, in the CAP, an operation panel or remote controller of a usual electrical household appliance is used as an interface. Even if the same task is to be performed by the same type of electrical household appliances, the operation procedure differs from manufacturers or types of appliances. As a result, it becomes difficult for a user to learn the operation method of the electrical household appliance. A conventional interface for controlling a CAP also suffers from such problems.

In an agent interface method for a household PC disclosed in the aforementioned laid-open application, a user needs only notify an agent of a desired function. The agent satisfies the need of the user by the CAP. Consequently, despite simple operation, there is a problem that the user does not have any opportunity to learn the operation method of the CAP.

Another method of controlling electrical household appliances by a conventional PC involves a function of displaying a television screen onto a display. However, such a method merely provides the same function as a remote controller of a television, and does not provide an intelligent process on the PC. Thus, even when an interesting program is on the air, the user can never watch the program unless he or she starts the AP that controls the television.

### SUMMARY OF THE INVENTION

An object of the present invention is to provide an agent display apparatus capable of unifying interfaces, an agent display method, and a storage medium storing an agent display program.

Another object of the present invention is to provide an agent display apparatus allowing a user to perform a desired operation while learning the operation procedure of an APIF, an agent display method, and a storage medium storing an agent display program.

Still another object of the present invention is to provide an agent display apparatus in which an agent extracts and recommends a program that interests a user, an agent display method, and a storage medium storing an agent display program.

According to one aspect of the present invention, an agent display apparatus displaying a personified agent for making it selectively perform a process includes: a first interface controlling display of the agent and inputting a request from a user; a searching portion searching for an action script with a procedure for controlling the first interface in accordance with the request input by the first interface; an executing portion executing the action script searched by the searching portion.

The executing portion executes the action script searched in accordance with the request from the user. For example, action scripts adapted to be used for the same kind but different types of electrical household appliances are prepared, so that the different types of electrical household appliances can be operated by the same process and interfaces can be unified.

According to another aspect of the present invention, an agent display method of displaying a personified agent for making it selectively perform a process includes the steps of: controlling display of the agent for inputting a request from a user; searching for an action script describing a procedure for controlling display of the agent in accordance with the input request; and executing the searched action script.

The action script searched in accordance with the request from the user is executed. For example, action scripts adapted to be used for the same kind but different types of electrical household appliances are prepared, so that the different types of electrical household appliances can be operated by the same process and interfaces can be unified.

Still another aspect of the present invention is directed to a storage medium which can be read by a computer storing a program for executing an agent display method of displaying a personified agent for making it selectively perform a process. The agent display method includes the steps of: controlling display of the agent and inputting a request from a user; searching for an action script describing a procedure for controlling display of the agent in accordance with the input request; executing the searched action script.

The action script searched in accordance with the request from the user is executed. Thus, for example, action scripts adapted to be used for the same kind but different types of electrical household appliances are prepared, so that the electrical household appliances can be operated by the same process and interfaces can be unified.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is an illustration showing an exemplary appearance of an agent display apparatus according to a first embodiment of the present invention.
Fig. 2 is a block diagram showing an exemplary structure of the agent display apparatus according to the first embodiment of the present invention.
Fig. 3 is a block diagram showing a structure of the agent display apparatus according to the first embodiment of the present invention.
Fig. 4 is a flow chart shown in conjunction with a process of the agent display apparatus according to the first embodiment of the present invention.
Fig. 5 is a flow chart used for describing in greater detail a process of step S5 of Fig. 4.
Fig. 6 is an illustration showing that a user makes a request to a displayed agent.
Fig. 7 is an illustration showing that the agent makes an utterance "displaying channel 1."
Fig. 8 is a flow chart showing another exemplary process of step S5 of Fig. 4.
Fig. 9 is an illustration showing that the agent makes an utterance "starting television AP."
Fig. 10 is an illustration showing that the agent makes an utterance "pressing power button."
Fig. 11 is an illustration showing that the agent makes an utterance "pressing button 1."
Fig. 12 is a flow chart used for explaining another process of the agent display apparatus according to the first embodiment of the present invention.
Fig. 13 is an illustration showing an agent displayed during the process of Fig. 12.
Fig. 14 is a block diagram showing a structure of an agent display apparatus according to a second embodiment of the present invention.
Fig. 15 is a flow chart used for explaining a process of the agent display apparatus according to the second embodiment of the present invention.
Fig. 16 is an illustration showing that the agent outputs its recommendation program by voice.

### DESCRIPTION OF THE PREFERRED EMBODIMENTS

### First Embodiment

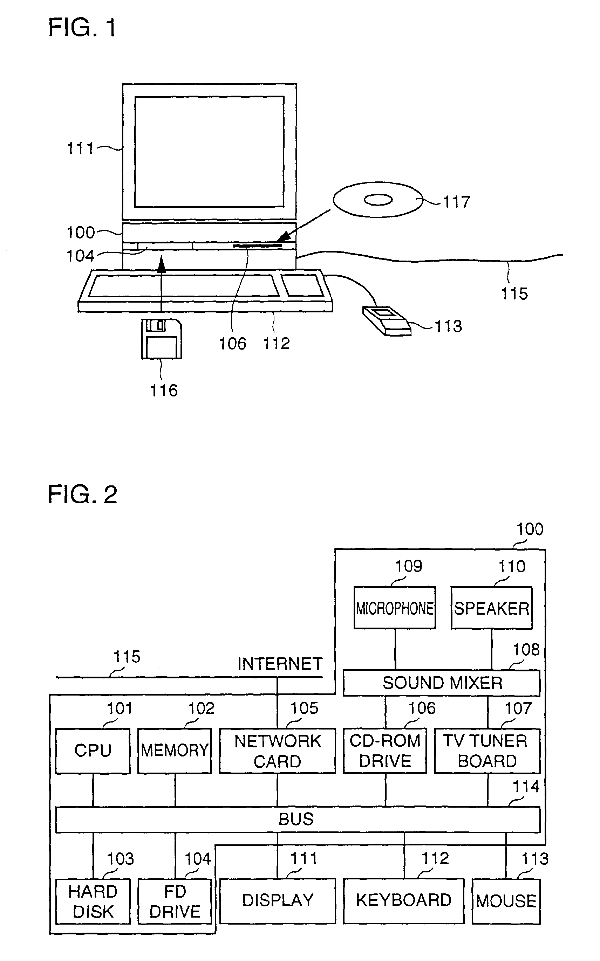

Fig. 1 is an illustration showing an exemplary appearance of an agent display apparatus according to the embodiment of the present invention. The agent display apparatus includes: a computer 100; a display apparatus 111; an FD (Floppy Disk) drive 104 mounted with an FD 116; a CD-ROM (Compact Disc-Read Only Memory) drive 106 mounted with a CD-ROM 117; a keyboard 112; and a mouse 113. The agent display program is supplied by a storage medium such as FD 116 or CD-ROM 117. The agent display program is executed by computer 100 for controlling display of the agent, for example. Alternatively, the agent display program may be supplied to computer 100 over a communication line from another computer.

Fig. 2 is a block diagram showing an exemplary structure of the agent display apparatus according to the embodiment of the present invention. Computer 100 shown in Fig. 1 includes: a CPU (Central Processing Unit) 101; a memory 102; a hard disk 103; FD drive 104; a network card 105; CD-ROM drive 106; a TV tuner board 107; a sound mixer 108; a microphone 109; and a speaker 110. CPU 101 performs a process while inputting/outputting data with respect to memory 102 or the like over bus 114. The agent display program stored in FD 116 or CD-ROM 117 is temporarily stored in hard disk 103 through FD drive 104 or CD-ROM drive 106 by CPU 101. CPU 101 for example controls display of the agent by loading the agent display program as necessary from hard disk 103 to memory 102 for execution.

Network card 105 is connected to communication line 115 for controlling data communication through the Internet or the like. Further, sound mixer 108 outputs a voice of a television program received by TV tuner board 107, a voice produced by voice synthesis, which will later be described, from speaker 110, and inputs a voice through microphone 109 for voice recognition which will later be described.

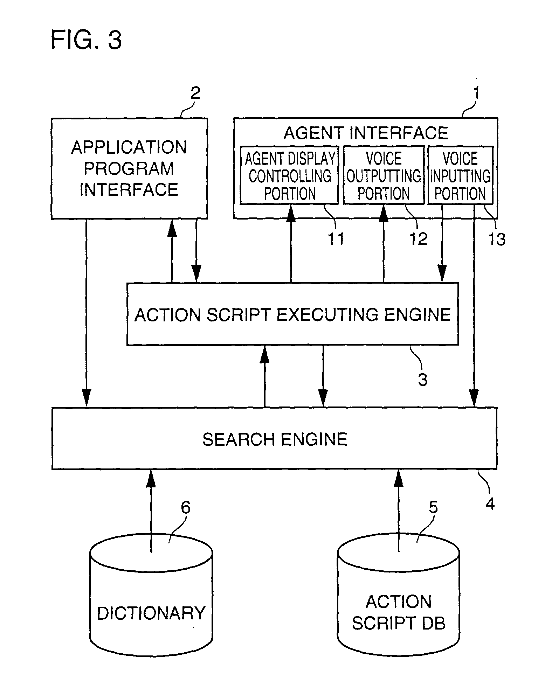

Fig. 3 is a block diagram showing a structure of the agent display apparatus according to the present embodiment. The agent display apparatus includes: an agent interface 1 controlling display of the agent and controlling input/output of the voice; an application program interface (APIF) 2 controlling a general application program or a CAP; an action script executing engine 3 executing an action script; an action script DB (database) 5; a search engine 4 searching an action script DB 5 in accordance with a search request from agent interface 1; and a dictionary 6 that search engine 4 refers in searching.

The action script refers to a procedure manual describing a procedure for implementing a function under the instruction from the user by cooperative operation of agent interface 1 and APIF 2. For example, action script DB 5 has action scripts that describe, according to functions, "turn up volume of television" and "reserve video recording."

Agent interface 1 includes: an agent display controlling portion 11 displaying a personified agent onto display apparatus 111 for operation; a voice outputting portion 12 outputting the agent displayed on display 111 with a voice from speaker 110; and a voice inputting portion 13 recognizing the voice of the user input from microphone 109. Voice outputting portion 12 may reproduce the voice by voice synthesis or may directly reproduce the previously recorded voice.

APIF 2 controls various application programs, or CAPs of a television and video which are not shown but preliminary installed in computer 100. Action script executing engine 3 executes an action script by controlling agent interface 1 and APIF 2 while interpreting the procedure described in the action script.

Search engine 4 searches for an optimum action script from action script DB 5 in accordance with a search request from a user that has been input from voice inputting portion 13 and outputs it to action script executing engine 3. For example, the search request from the user may contain a natural language such as "want to watch television" that has been input through voice inputting portion 13 by the user. Search engine 4 searches action script DB 5 with reference to dictionary 6 upon receipt of the search request from the user, and selects an action script which is considered optimum for the request from the user, e.g., an action script "turn on TV" and outputs it to action script executing engine 3.

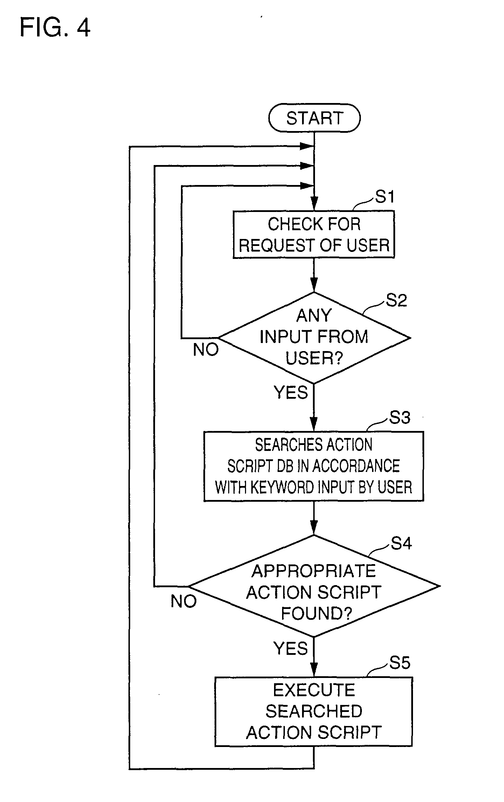

Fig. 4 is a flow chart shown in conjunction with a process of the agent display apparatus according to the present embodiment. When the agent display program is executed by CPU 101, voice inputting portion 13 is brought into a state of waiting for a request input of voice from the user. If the user inputs voice, voice inputting portion 13 recognizes the voice of the user and converts it to a character code for storage in a buffer which is not shown. Then, a determination is made as to if an input has been made by the user by checking if the character code is stored in the buffer (S1).

If there is no input of voice from the user (S2, No), the process returns to step S1 and repeats the process after an appropriate period of time. If there is an input from the user (S2, Yes), search engine 4 uses the character code as a keyword and searches for an action script which is the closest in meaning to the request from the user with reference to dictionary 6 (S3).

If an appropriate action script is not found (S4, No), the process returns to step S1 for repeating the following process. If an appropriate action script is found (S4, Yes), action script executing engine 3 executes the searched action script (S5). When action script executing engine 3 completes execution of the action script, it returns to step S1 for repeating the following process.

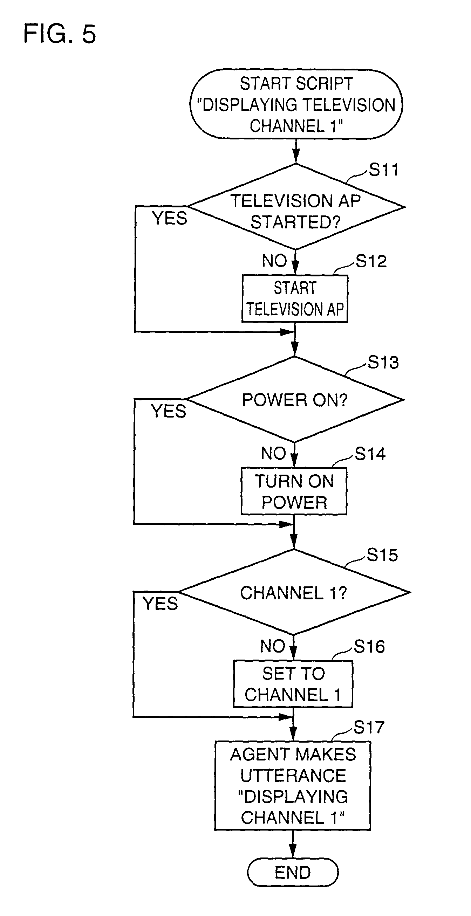

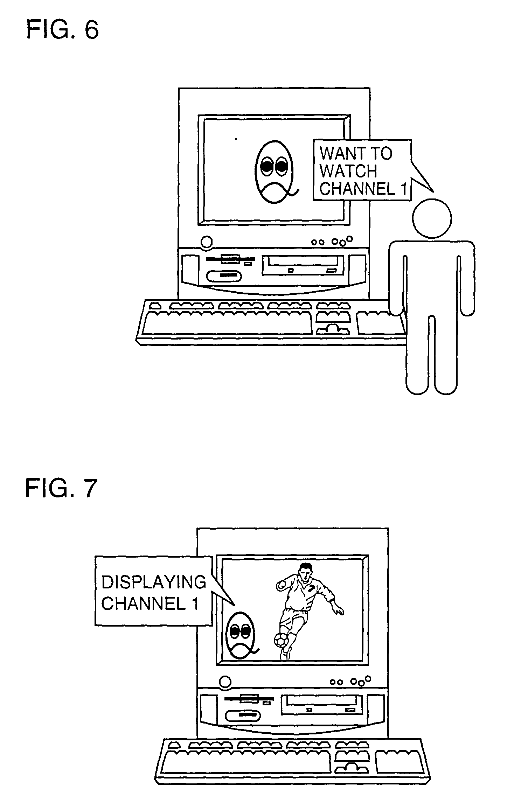

Fig. 5 is a flow chart used for describing in greater detail the process of step S5 in Fig. 4. Fig. 5 shows a procedure of "setting television channel to 1" as an exemplary action script. As shown in Fig. 6, if a request of "want to watch channel 1" is made to the personified agent displayed on display apparatus 111 by the user, search engine 4 searches action script DB5 for an action script "display television channel 1." Then, that action script is output to action script executing engine 3.

Upon receipt of the action script "display television channel 1" from search engine 4, action script executing engine 3 asks APIF 2 if the television AP has been started. If the television AP has been started (S11, Yes), the process proceeds to step S13. If the television AP has not been started (S11, No), a request for starting the television AP is made to APIF 2 (S12), and then the process proceeds to step S13.

In step S13, action script executing engine 3 asks APIF 2 if the power of the television is on. If the power of the television is on (S13, Yes), the process proceeds to step S15. If the power of the television is not on (S13, No), a request for turning on the television is made to APIF 2 (S14), and the process proceeds to step S15.

In step S15, action script executing engine 3 asks APIF 2 if the television channel is 1. If the television channel is 1 (S15, Yes), the process proceeds to step S17. If the television channel is not 1 (S15, No), a request for setting the channel to 1 is made to APIF 2 (S16), and the process proceeds to step S17.

In step S17, the agent displayed on display apparatus 111 is made to give an utterance "displaying channel 1" and the process ends. Fig. 7 shows that the television channel is set to 1 and agent gives the utterance "displaying channel 1."

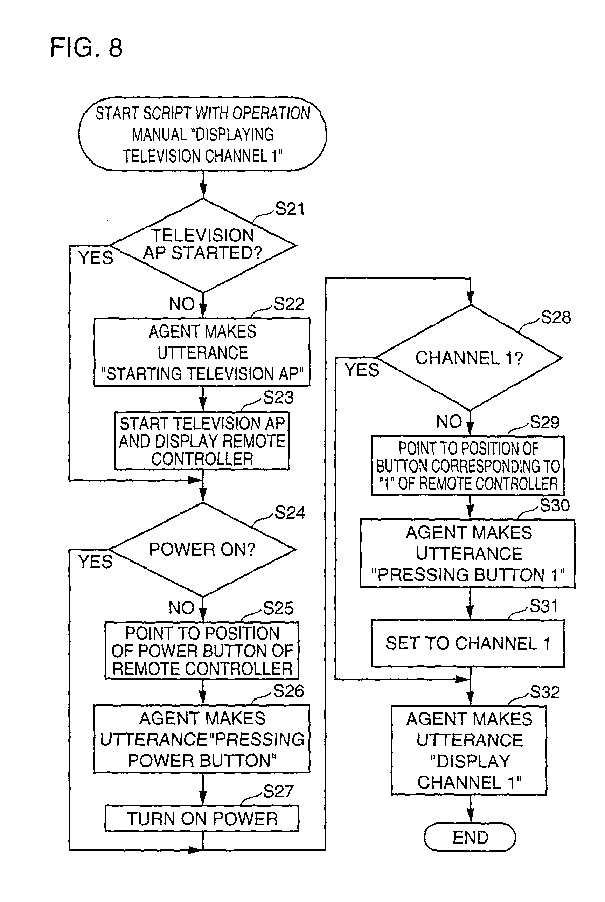

Fig. 8 is a flow chart used for explaining another exemplary process of step S5 in Fig. 4. A procedure of "displaying television channel 1" is shown as an exemplary action script. As shown in Fig. 6, if a request "want to watch channel 1" is made to the personified agent displayed on display apparatus 111 by the user, search engine 4 searches action script 5 for an action script "display television channel 1." The action script is output to action script executing engine 3.

Upon receipt of the action script "display television channel 1" from search engine 4, action script executing engine 3 asks APIF 2 if the television AP has been started. If the television AP has been started (S21, Yes), the process proceeds to step S24. If the television AP has not been started (S21, No), voice outputting portion 12 makes the agent displayed on the screen give an utterance "starting television AP" (S22).

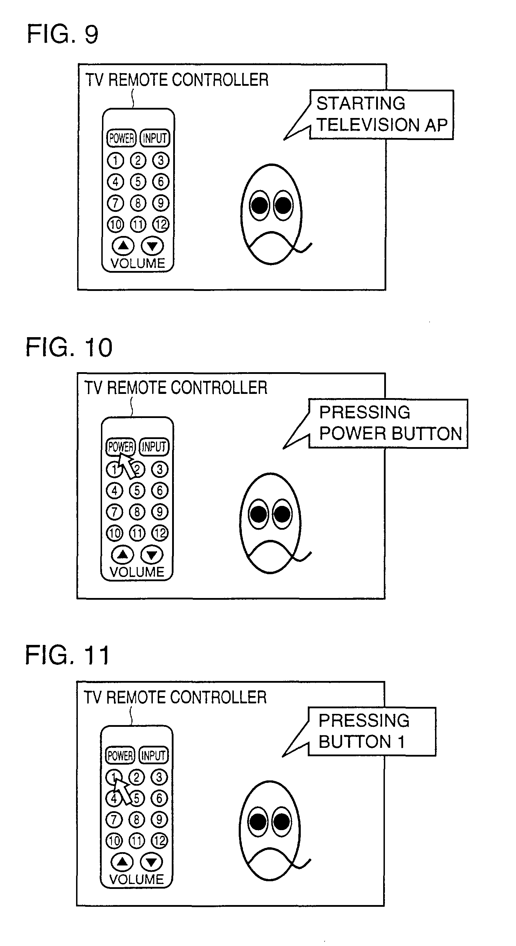

Action script executing engine 3 requests APIF 2 to start the television AP (S23), makes display apparatus 111 display an image of a TV remote controller and proceeds to step S24. Fig. 9 shows the image of the TV remote controller is displayed and the agent makes an utterance "starting television AP."

In step S24, action script executing engine 3 asks APIF 2 if the power of the television is on. If the power of the television is on (S24, Yes), the process proceeds to step S28. If the power of the television is not on (S24, No), the power button of the remote controller displayed on display apparatus 111 is pointed (S25). The button may be pointed by moving a mouse cursor to the position of the power button, by using the agent to point that position, or by flashing on and off the button per se.

Then, voice outputting portion 12 makes the agent displayed on the screen give an utterance "pressing power button" (S26). Action script executing engine 3 makes a request for turning on the television to APIF 2 (S27), and proceeds to step S28. Fig. 10 shows that the power button of the remote controller is pointed and the agent makes an utterance "pressing power button."

In step S28, action script executing engine 3 asks APIF 2 if the television channel is 1. If the television channel is 1 (S28, Yes), the process proceeds to step S32. If the television channel is not 1 (S28, No), the position of the button corresponding to "1" of the remote controller displayed on display apparatus 111 is pointed (S29).

Then, action script executing engine 3 controls voice outputting portion 12 to make the agent give an utterance "pressing button 1" (S30). Action script executing engine 3 makes a request for turning the channel to 1 to APIF 2 (S31), and proceeds to step S32. Fig. 11 shows that the button of "1" of the remote controller is pointed and the agent is made to give the utterance "pressing button 1."

In step S32, the agent displayed on display apparatus 111 is made to give an utterance "displaying channel 1," and the process ends. Fig. 7 shows that the television channel is set to 1 and the agent is made to give the utterance "displaying channel 1."

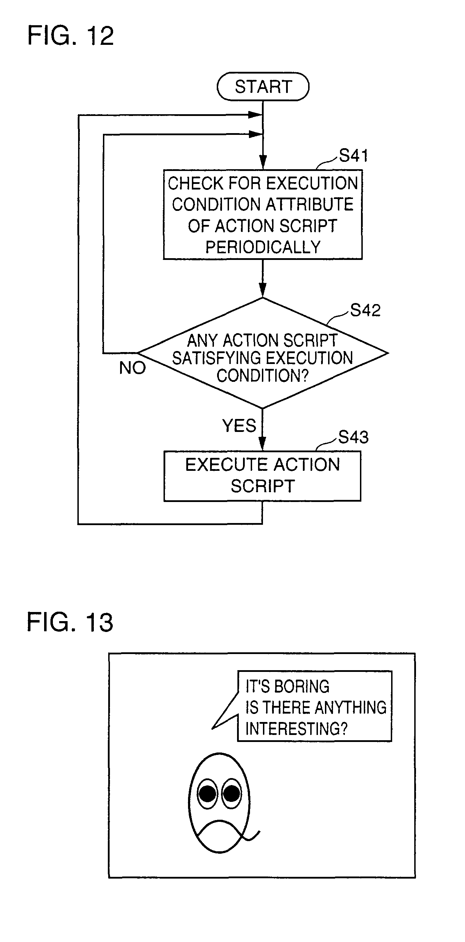

Fig. 12 is a flow chart shown in conjunction with another process of the agent display apparatus according to the present embodiment. The above-described action script includes an execution condition attribute. The execution condition attribute refers to a condition for executing the action script, including e.g., an appropriate combination of date when that action script is to be executed, a status of APIF 2, an activity history of the personal computer, execution frequency or the like. The execution condition attribute may be described in any manner, and a timing condition for causing the agent to act independently without external triggering needs only be described.

First of all, action script executing engine 3 periodically searches for an action script stored in action script DB 5 and checks the execution condition attribute (S41). If there is no action script that satisfies the execution condition (S42, No), action script executing engine 3 returns to step S41 and repeats the following process. If there is an action script that satisfies the execution condition (S42, Yes), action script executing engine 3 executes the action script satisfying that condition (S43) and returns to step S41 for repeating the following process. Fig. 13 shows an agent displayed when executing the process.

As described above, the agent display apparatus of the present embodiment allows various application programs to be operated by interactively communicating with the personified agent and also allows unification of interfaces. Further, since the application program is executed while making the agent follow the operation procedure of the APIF, the user can perform a desired operation while learning the operation procedure of the APIF.

### Second Embodiment

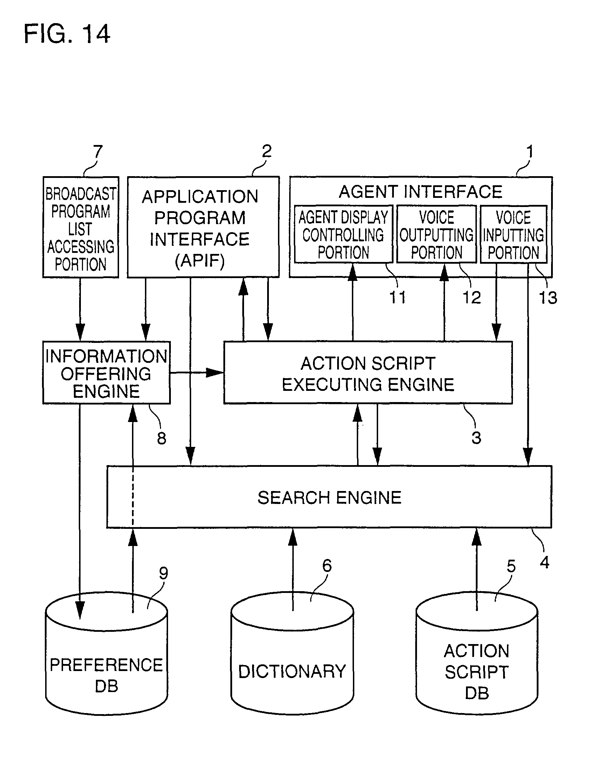

Fig. 14 is a block diagram showing a structure of an agent display apparatus according to the second embodiment of the present invention. Comparing with the agent display apparatus according to the first embodiment shown in Fig. 3, the agent display apparatus of the second embodiment additionally includes: a broadcast program list accessing portion 7 making an access to an electronic television program list; an information offering engine 8 acquiring information that is likely to interest the user and offering it to action script executing engine 3; and a preference DB 9 storing a program that has been viewed by the user and obtained by making reference to the television program list accessed by broadcast program list accessing portion 7. Therefore, description of the overlapping portion of the structure and function will not be given.

Broadcast program list accessing portion 7 makes an access to the Internet through network card 105 for acquiring information from a homepage that shows a television program list. Alternatively, TV tuner board 107 may acquire the television program list through digital broadcasting. Information offering engine 8 acquires information including a channel that the user is currently viewing from the television AP through APIF 2, and stores the program that the user has watched in preference DB 9 referring to the television program list accessed by broadcast program list accessing portion 7. Information offering engine 8 refers to the television program list obtained by broadcast program list accessing portion 7 and outputs information on the program that is likely to interest the user, if any, to action script executing engine 3 based on a history of viewed programs of the user. In searching for the program that would interest the user, the television program list may be searched by search engine 4.

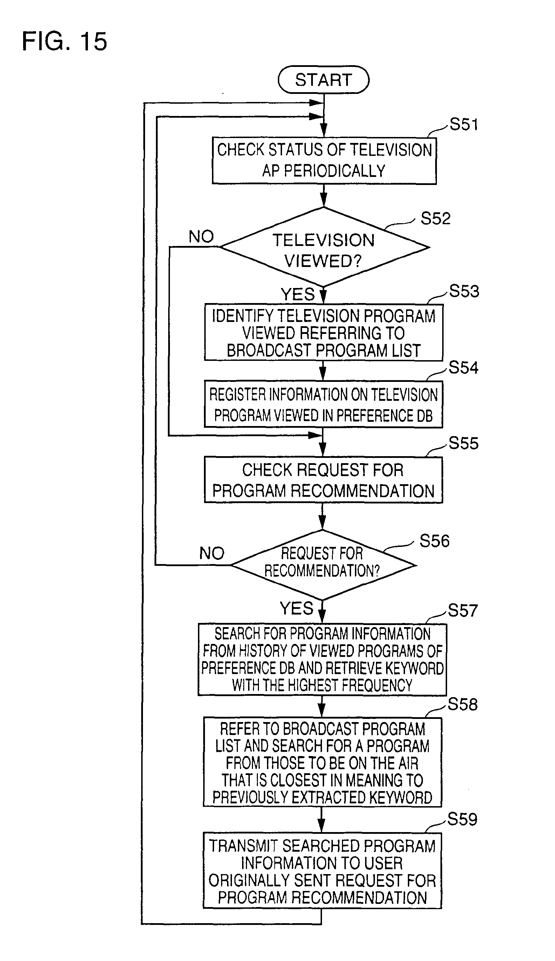

Fig. 15 is a flow chart shown in conjunction with a process of the agent display apparatus according to the present embodiment. First of all, information offering engine 8 periodically checks the status of the television AP through APIF 2 (S51). If the television is not viewed (S52, No), the process proceeds to step S55. If the television is viewed (S52, Yes), the television program that the user is viewing is identified with reference to the television program list (S53), and the information on that television program is registered in preference DB 9 (S54).

In step S55, a determination is made as to if there is a request for a program recommendation. The request for the program recommendation is made, for example by displaying the region indicating the program recommendation request on the display screen of display apparatus 111, which region is then clicked by the user with mouse 113, for example. If there is no request for program recommendation (S56, No), the process returns to step S51 and the following process is repeated.

If there is a request for program recommendation (S56, Yes), information offering engine 8 refers to the history of viewed programs stored in preference DB 9 and extracts a keyword common to the programs that the user particularly prefers (S57). In the process, the information stored in preference DB 9 may be searched by search engine 4. Then, information offering engine 8 refers to the television program list and searches for a program which is the closest in meaning to the keyword extracted by step S57, from programs to be on the air (S58).

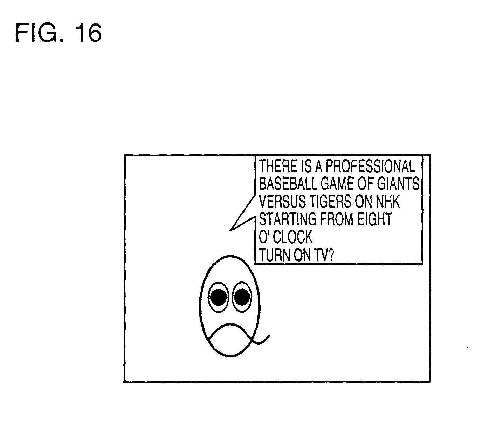

Information offering engine 8 outputs the searched program information to action script executing engine 3 (S59) and returns to step S51 for repeating the following process. Action script executing engine 3 controls voice outputting portion 12 for outputting the searched program information by voice, so as to offer a recommended program to the user. Action script executing engine 3 may televise the recommended program by outputting a request for channel change to the television AP through APIF 2. Fig. 16 shows that the program recommended by the agent is output by voice.

As described above, the agent display apparatus of the present embodiment allows information offering engine 8 to extract a keyword that is common to the programs with the highest frequency from program information stored in preference DB 9, based on which a television program is selected. Thus, a television program which is likely to interest the user can be recommended and offered by the agent. Thus, the user does not miss a program that interests him or her.

Although the present invention has been described and illustrated in detail, it is clearly understood that the same is by way of illustration and example only and is not to be taken by way of limitation, the spirit and scope of the present invention being limited only by the terms of the appended claims.

## Claims

1. An agent display apparatus displaying a personified agent for making the agent selectively perform a process, comprising:
a first interface controlling display of said agent and inputting a request from a user;
a searching portion searching for an action script describing a procedure of controlling said first interface in accordance with the request input from said first interface; and
an executing portion executing the action script searched by said searching portion.

2. The agent display apparatus according to claim 1, wherein said executing portion includes a demonstrating portion controlling said first interface and making said agent demonstrate an operation procedure.

3. The agent display apparatus according to claim 1, wherein said first interface includes an agent displaying portion controlling an operation of said agent for display;
a voice outputting portion outputting a voice output from said agent; and
a voice inputting portion inputting a voice of the user for extracting said request.

4. The agent display apparatus according to claim 1, further comprising a second interface controlling an application program, wherein said executing portion includes a control procedure executing portion executing a procedure of cooperatively controlling said first and second interfaces described in said action script.

5. The agent display apparatus according to claim 4, further comprising an accessing portion making an access to an electronic broadcast program list, and
an extracting portion extracting a program interesting the user with reference to the broadcast program list accessed by said accessing portion, wherein
said executing portion includes a controlling portion controlling said second interface for making said application program televise the program extracted by said extracting portion.

6. The agent display apparatus according to claim 5, wherein said extracting portion includes a storing portion acquiring and storing information on a program viewed by the user from the broadcast program list accessed by said accessing portion, and a program extracting portion extracting a keyword from the information on the program stored in said storing portion for extracting a program which interests said user in accordance with said extracted keyword with reference to said broadcast program list.

7. An agent display method displaying a personified agent for making the agent selectively perform a process, comprising the steps of:
controlling display of said agent and inputting a request from a user;
searching for an action script describing a procedure of controlling display of said agent in accordance with said input request; and
executing said searched action script.

8. The agent display method according to claim 7, wherein said step of executing said action script includes the step of making said agent demonstrate an operation procedure.

9. The agent display method according to claim 7, wherein said step of controlling display of said agent and inputting the request from the user includes the steps of
controlling an operation of said agent for display,
outputting a voice produced by said agent, and
inputting a voice from the user and extracting said request.

10. The agent display method according to claim 7, wherein said step of executing said action script includes the step of controlling an application program.

11. The agent display method according to claim 10, further comprising the steps of:
accessing an electronic broadcast program list; and
extracting a program which interests the user with reference to said accessed broadcast program list, wherein said step of executing said action script includes the step of making said application program televise said extracted program.

12. The agent display method according to claim 11, wherein said step of extracting the program which interests said user includes the steps of
acquiring information on a program viewed by the user from said accessed broadcast program list, and
extracting a keyword from the information on said accessed program for extracting a program which interests said user in accordance with said extracted keyword with reference to said broadcast program list.

13. A storage medium capable of being read with a computer storing a program for executing an agent display method of displaying a personified agent for making the agent selectively perform a process, said agent display method comprises the steps of:
controlling display of said agent and inputting a request from a user;
searching for an action script describing a procedure of controlling display of said agent in accordance with said input request; and
executing said searched action script.

14. The storage medium storing an agent display program according to claim 13, wherein said step of executing said action script includes the step of making said agent demonstrate an operation procedure.

15. The storage medium storing the agent display program according to claim 13, wherein said step of controlling display of said agent and inputting the request from the user includes the steps of
controlling an operation of said agent for display,
outputting a voice of said agent, and
inputting a voice of the user and extracting said request.

16. The storage medium storing the agent display program according to claim 13, wherein said step of executing said action script includes the step of controlling an application program.

17. The storage medium storing the agent display program according to claim 16, wherein said agent display method further comprises the steps of:
accessing an electronic broadcast program list; and
extracting a program which interests the user with reference to said accessed broadcast program list, and said step of executing said action script includes the step of making said application program televise said extracted program.

18. The storage medium storing the agent display program according to claim 17, wherein said step of extracting the program which interests said user includes the steps of acquiring information on a program viewed by the user from said accessed broadcast program list, and
extracting a keyword from the information on the accessed program for extracting a program which interests said user in accordance with said extract keyword with reference to said broadcast program list.
